# EUROPEAN PATENT SPECIFICATION

(11) **EP 2 991 750 B1**
(45) Date of publication and mention of the grant of the patent: **08.07.2020**
(21) Application number: 13883568.1
(22) Date of filing: 03.05.2013
(51) Int. Cl.: B01D 53/14, B01D 53/78, B01D 53/62

(54) **SYSTEMS AND METHODS FOR MULTI-CELLED GAS PROCESSING**
SYSTEME UND VERFAHREN ZUR GASVERARBEITUNG IN MEHREREN ZELLEN
SYSTÈMES ET PROCÉDÉS DE TRAITEMENT MULTICELLULAIRE DE GAZ

(43) Date of publication of application: 09.03.2016
(73) Proprietor: Fluor Technologies Corporation, Sugar Land, TX 77478 (US)
(72) Inventor: REDDY, Satish, Laguna Beach, California 92651 (US); YONKOSKI, Joseph, Irvine, California 92612 (US)
(74) Representative: Brown, Alexander Edward
(86) International application number: PCT/US2013/039545
(87) International publication number: WO 2014/178882

(56) References cited:
- EP-A1- 2 520 352
- EP-A1- 2 520 352
- WO-A1-98/32523
- WO-A2-2012/069827
- JP-A- H01 123 616
- US-A- 4 063 899
- US-A- 4 263 021
- US-A1- 2003 019 358
- US-A1- 2013 069 254

## Description

### Field of the Invention

The field of the invention is gas processing systems and methods.

### Background

The following background discussion includes information that may be useful in understanding the present invention. It is not an admission that any of the information provided herein is prior art or relevant to the presently claimed invention, or that any publication specifically or implicitly referenced is prior art.

In the field of carbon dioxide (CO₂) capture, particularly low-pressure, post-combustion CO₂ capture, large volumes of gas are typically processed. As rules and regulations restrict the amount of CO₂ that may be emitted from large, single-point emission sources, the volumes of gas that must be processed will become increasingly large. These large gas flows can require multiple trains of large-scale gas processing columns, which generally consume valuable plot space, represent significant capital cost, and increase the total equipment count of a plant.

With the rising prevalence of renewable energy (*e*.*g*., solar, wind, etc.), the ability to operate power and carbon capture plants at deep turndown capacity is important. An example of a gas processing system is disclosed in JPH01123616.

Thus, there is still a need for improved gas processing systems and methods having reduced complexity while allowing for the ability to scale to meet capacity demand.

### Summary of the Invention

The inventive subject matter provides apparatus, systems and methods in which one can process gas more efficiently, and while reducing the construction materials and time required, equipment requirements, and plot space requirements.

The systems include one or more gas processing columns, each of which has an outer housing. The column combines, in a modular style, two or more cells disposed within the outer housing with each cell having a gas-liquid contacting area. It is especially required that the cells are fluidly coupled to one another, and share a common liquid space in a bottom portion. At least one of the cells includes a fluid outlet through which fluid from each of the cells can exit. This advantageously reduces the amount of equipment required to remove fluid from the cells.

The systems are also modular such that additional columns can be quickly coupled to the existing gas processing column and thereby expand the maximum output of the system. In addition, the modular style of the system allows for flexibility in operation and during construction, and simplifies retrofits and plant expansions.

In addition, the inventive subject matter discussed herein allows for multiple gas processing columns to be combined into a single, modular unit. Such a unit permits a single train to be maintained when gas processing columns become too large (*e*.*g*., 800 MW units) by using multi-cell columns for gas treating.

This inventive subject matter discussed herein and defined in claims 1 and 7 is especially applicable to carbon capture systems, but could be employed in any low-pressure absorption system including, for example, flue gas desulfurization and flue gas cooling.

Unless the context dictates the contrary, all ranges set forth herein should be interpreted as being inclusive of their endpoints, and open-ended ranges should be interpreted to include commercially practical values. Similarly, all lists of values should be considered as inclusive of intermediate values unless the context indicates the contrary.

Various objects, features, aspects and advantages of the inventive subject matter will become more apparent from the following detailed description of preferred embodiments, along with the accompanying drawing figures in which like numerals represent like components.

### Brief Description of the Drawing

Fig. 1 is a schematic of one embodiment of a gas processing column having at least two cells.
Fig. 2 is a schematic of another embodiment of a gas processing column having four cells.
Fig. 3A is a schematic of another embodiment of a gas processing column having N cells.
Fig. 3B is a plan view of the gas processing column of Fig. 3A.
Fig. 4 is a plan view of a modular gas processing system capable of increasing capacity from two cells to eight cells.
Fig. 5 is a flowchart of one embodiment of a method for gas processing.

### Detailed Description

One should appreciate that the disclosed techniques provide many advantageous technical effects including reducing construction materials, equipment requirements, and plot space requirements, while allowing for flexibility in operation and during construction.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, 13, C, or D, even if not explicitly disclosed.

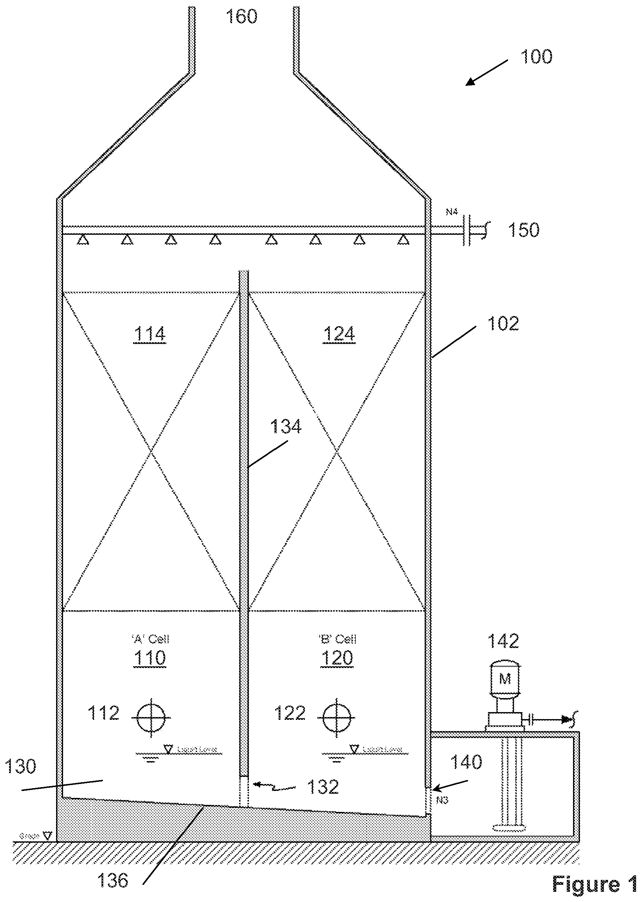

In **Figure 1**, a gas processing column 100 is shown having an outer housing 102. The column 100 preferably includes at least first and second cells 110 and 120 disposed within the outer housing 102. However, it is contemplated that the column 100 could optionally include three or more cells. Each of the first and second cells 110 and 120 preferably comprises a gas-liquid contacting surface area 114 and 124, respectively, such that each cell can clean or otherwise condition an incoming gas.

It is required that the first and second cells 110 and 120 are fluidly coupled to one another via a shared common liquid space 130 (e.g., liquid can flow between the cells). In this manner, liquid can be shared between the cells 110 and 120 such as through opening 132, As shown in Figure 1, the first and second cells 110 and 120 are separated by a first wall 134 having opening 132 in a bottom portion of the first wall 134, such that liquid within each of the cells 110 and 120 can flow to the other cell via opening 132. Such a column 100 requires only a single train of pumps and piping leading to (*e.g.*, liquid inlet 150) and from (*e*.*g*., fluid outlet 140 and pump 142) column 100, thereby optimizing plot area and reducing equipment count and cost. To encourage passive movement of liquid from cell 110 to cell 120, it is required that one or both of cells 110 and 120 include a downward-sloping floor 136.

It is contemplated that column 100 can be constructed out of steel or lined concrete, although any commercially suitable materials could be used. Where concrete is used, it is further contemplated that the concrete could be lined with plastic, tile or other impervious inert material.

A fluid outlet 140 is coupled to the second cell 120, such that fluid from both of the first and second cells 110 and 120 can exit via the fluid outlet 140. This is advantageous as it reduces the complexity of conduits from the column 100 by eliminating the need to have separate outlet conduits for each cell, while also reducing the total number of pumps and other components required.

Preferably, fluid outlet 140 comprises at least one pump 142 to facilitate removal of liquid from the column 100. In some contemplated embodiments, pump 142 can be a vertical can pump to minimize the vessel skirt height and eliminates suction piping and valves.

The multi-celled column 100 typically will have as many gas inlets as cells. Thus, as shown in Figure 1, each of first and second cells 110 and 120 includes a gas inlet 112 and 122, respectively.

Advantageously, column 100 minimizes plot space as compared with prior configurations of columns, while also offering operational flexibility because each of the cells can be independently operable, such that not all of the cells must be operated simultaneously. This allows for very low turn-down rates. For example, the multi-cell column 100 can be easily turned down by shutting down one or more of cells 110 and 120. In this matter, a carbon dioxide capture plant capacity can be changed to match varying power plant loads.

The cells 110 and 120 are preferably constructed in a modular style simplifying retrofitting or capacity increases by adding additional cells to the existing system. These additional cells can advantageously utilize the existing fluid inlets and outlets of the existing cells, reducing the need for additional equipment and plot space.

Column 100 further includes one or more exhaust outlets 160. As shown in Figure 1, outlet 160 can be fluidly coupled to each of the first and second cells 110 and 120, although each of the cells could alternatively have its own outlet.

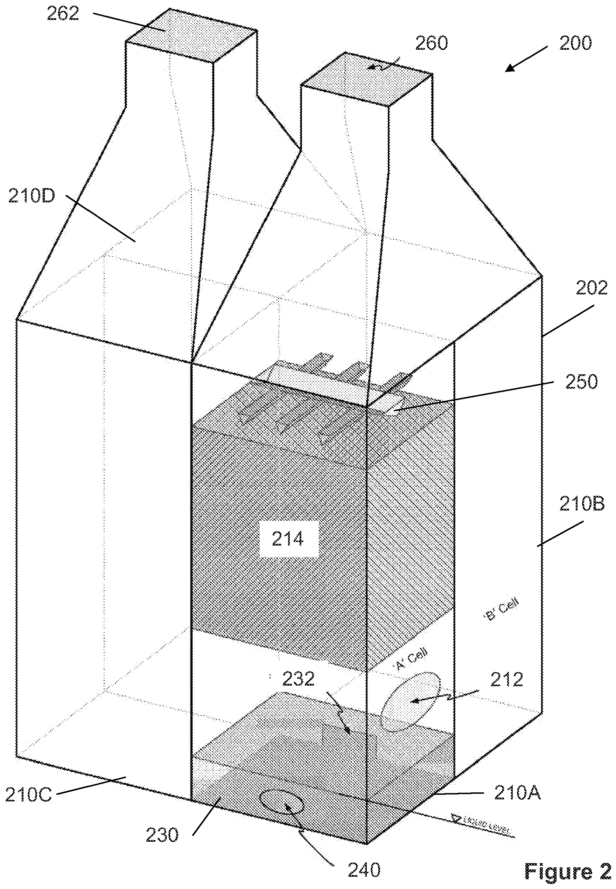

**Figure 2** illustrates a gas processing system 200 having four cells 210A-210D arranged in a side-by-side cluster, although it is also contemplated that the cells could be arranged in-line. Although not shown, each of the cells 210A-210D can include a gas inlet 212. A common liquid space 230 can fluidly couple the cells 210A-210D to one another, as well as to fluid outlet 240. Cells 210A-210B could be fluidly coupled via opening 232 in the wall dividing cell 210A from cell 210B. The cell walls can include additional openings allowing for the cells 210A-210D to be fluidly coupled with one another.

Alternatively, it is contemplated that cells 210A-210B could be fluidly coupled to one another and to fluid outlet 240, and cells 210C-210D could be fluidly coupled to one another and to a second fluid outlet.

Cell 210A includes a liquid inlet, which feeds a fluid to distributors 250 disposed within cell 210A. It is further contemplated that the liquid inlet could also feed fluid to cells 210C, and potentially cells 210B and 210D, to reduce the number of liquid inlets required. In other contemplated embodiments, the cells could have two or more liquid inlets. For example, cells 210A and 210C could share fluid from a first liquid inlet, while cells 210B and 210D could share fluid from a second liquid inlet.

The cells 210A-210D could share one or more exhaust outlets. As shown in Figure 2, cells 210A-210B could share a first exhaust outlet 260, while cells 210C-210D could share a second exhaust outlet 262. Alternatively, each of the cells could have its own exhaust outlet that may or may not feed to a common exhaust duct.

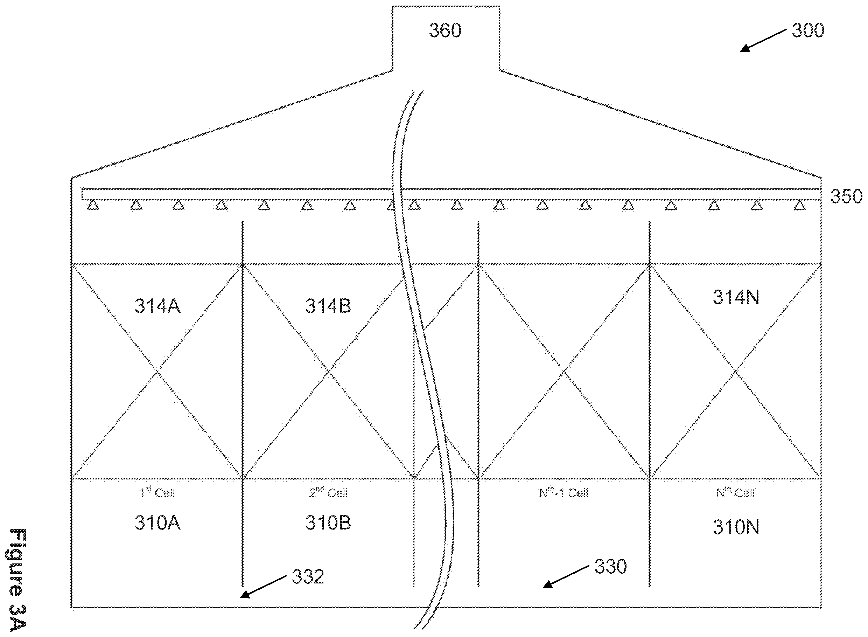

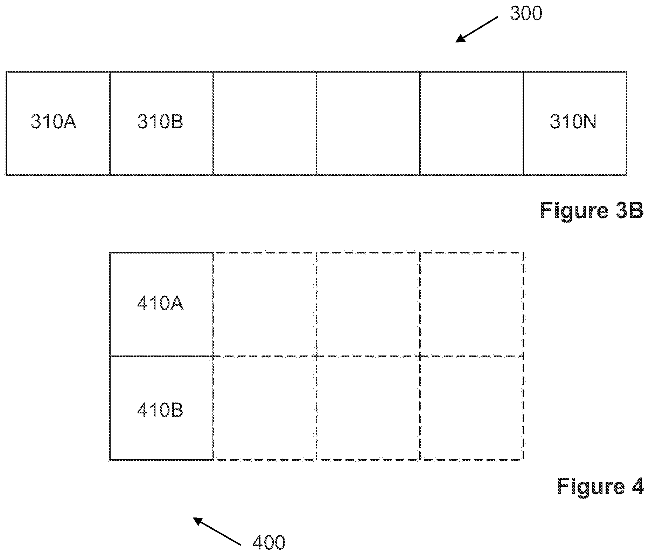

**Figures 3A-3B** illustrate another embodiment of a gas processing system 300, having a plurality of cells 310A-310N disposed in an in-line fashion, although it is contemplated that some of the cells could be grouped, such as in a side-by-side cluster of columns having cells, for example. The system 300 could further include multiple columns, each of which comprises at least two cells that are fluidly coupled to each other.

As shown in Figure 3A, the cells 310A-310N are fluidly coupled via a common liquid space 330, and fluid is allowed to flow from one cell to an adjacent cell via openings 332 in a wall dividing adjacent cells.

Each of the cells 310A-310N have a gas-liquid contacting system 314A-314N, respectively, which could be used for, for example, carbon capture, direct contact cooling or other gas treating processes.

The cells 310A-310N can further include a shared liquid distributor 350 configured to distribute a liquid within at least a portion of each of the cells 310A-310N, as well as a shared exhaust conduit 360. However, it is contemplated that the cells 310A-310N could be separated into sets of one or more cells, each of which includes a separate liquid inlet / distributor and/or exhaust conduit.

**Figure 4** illustrates another embodiment of a gas processing system 400 having a column 402 that includes first and second cells 410A-410B. As shown in dashed lines, the system 400 can be constructed in a modular style, allowing for easy retrofits or increases of the system's capacity by increasing the number of cells or varying the number of cells in operation at a given time. The later-added cells can be fluidly coupled to the existing cells 410A-410B via a common liquid space, and thereby utilize the fluid outlet of the existing cells without requiring the need for additional equipment and much space outside of that shown in Figure 4.

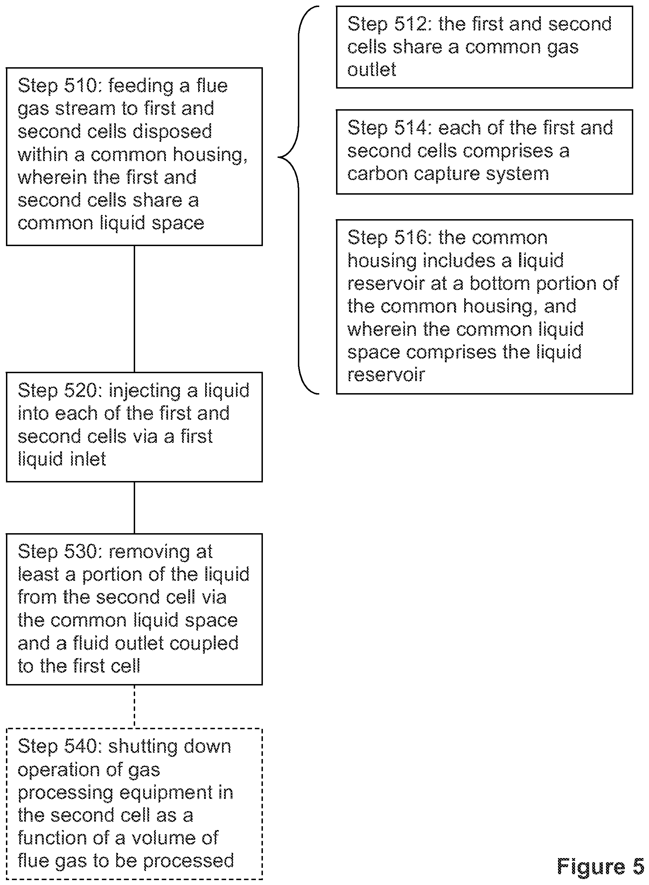

**Figure 5** illustrates one embodiment of a method for processing gas, In step 510, a flue gas stream is fed to first and second cells that are disposed in a common housing and share a common liquid space. The housing could include three or more cells depending on the requirements of the system.

The first and second cells share a common gas outlet in step 512, and each of the first and second cells comprises a carbon capture system in step 514. It is further contemplated that one or both of the cells could include a direct contact cooler. In step 516, the common liquid space comprises a liquid reservoir disposed at a bottom portion of the common housing.

In step 520, a liquid is injected into each of the first and second cells via a shared first liquid inlet. At least a portion of the liquid can advantageously be removed from the second cell via the common liquid space and a fluid outlet coupled to the first cell in step 530. This eliminates the need for separate fluid outlets for each of the cells, reducing the overall footprint of the system.

Optionally, in step 540, operation of gas processing equipment in the second cell can be shut down as a function of a volume of flue gas to be processed. Thus, for example, the power requirements of the system can be reduced when there is a lower volume of gas to be processed and subsequently raised as the volume of flue gas increases.

In some embodiments, the numbers expressing quantities of ingredients, properties such as concentration, reaction conditions, and so forth, used to describe and claim certain embodiments of the invention are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable. The numerical values presented in some embodiments of the invention may contain certain errors necessarily resulting from the standard deviation found in their respective testing measurements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each separate value falling within the range. Unless otherwise indicated herein, each individual value is incorporated into the specification as if it were individually recited herein. All methods described herein can be performed in any suitable order unless otherwise indicated herein or otherwise clearly contradicted by context. The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

## Claims

1. A modular gas processing system, comprising:
an outer housing (102) configured to allow for modular placement of cells within the outer housing (102):
a first cell (110, 210A, 310A) and a second cell (120, 210B, 310B) disposed within the outer housing (102), wherein each of the first cell (110, 210A, 310A) and the second cell (120, 210B, 310B) comprises a gas-liquid contacting surface area (114,124), wherein the first cell (110, 210A, 310A) and the second cell (120, 210B, 310B) share a common liquid space (130) comprising a liquid reservoir, wherein the first cell (110, 210A, 310A) and the second cell (120, 210B, 310B) are fluidly coupled to one another via the common liquid space (130), and wherein the second cell (120, 210B, 310B) is capable of being shut down as a function of a volume of flue gas to be processed, wherein the first cell (110, 210A, 310A) comprises a first gas inlet (112), and wherein the second cell (120, 210B, 310B) comprises a second gas inlet (122);
a fluid outlet (140) coupled to each of the first cell (110, 210A, 310A) and the second cell (120, 210B, 310B), wherein the common liquid space (130) comprises a floor (136) that slopes down towards the fluid outlet (140) coupled to each of the first and second cells (110, , 210A, 310A 120, 210B, 310B), and wherein the first and second cells (110, 210A, 310A, 120, 210B, 310B) are separated by a first vertical wall (134) having an opening (132) in a bottom portion of the first wall (134), such that liquid within each cell (110, 210A, 310A,120, 210B, 310B) can flow to an adjacent cell (110, 210A, 310A,120, 210B, 310B) via the opening (132) and a level of the liquid reservoir is above the opening (132) ;
a liquid inlet (150) coupled to a first distributor disposed within the first cell (110, 210A, 310A) and a second distributor disposed within the second cell (120, 210B, 310B), wherein the first distributor and the second distributor are configured to distribute a liquid within at least a portion of each of the first cell (110, 210A, 310A) and the second cell (120, 210B, 310B); and
one or more exhaust outlets (160) to allow the flue gas processed to leave the housing (102);
wherein the first cell (110, 210A, 310A) and the second cell (120, 210B, 310B) are independently operable.

2. The modular gas processing system of claim 1, wherein the common liquid space (130) is fluidly coupled to a first pump (142).

3. The modular gas processing system of claim 1, wherein each of the first cell (110, 210A, 310A) and the second cell (120, 210B, 310B) is configured to receive a feed gas, and wherein the fluid outlet (140) comprises a gas outlet (160) in an upper portion of the outer housing (102) that is fluidly coupled to each of the first cell (110, 210A, 310A) and the second cell (120, 210B, 310B).

4. The modular gas processing system of claim 1, further comprising:
a third cell (210C, 310C) and a fourth cell (210D, 310D) disposed within the outer housing (102);
wherein the first cell (110, 210A, 310A), the second cell (120, 210B, 310B), the third cell (210C, 310C), and the fourth cell (210D, 310D) are fluidly coupled to one another via the common liquid space; and wherein the fluid outlet is coupled to each of the third cell (210C, 310C) and the fourth cell(210D, 310D).

5. The modular gas processing system of claim 1, wherein the one or more exhaust outlets (160) comprise a first gas outlet and a second gas outlet, wherein the first gas outlet is fluidly coupled to the first cell (110, 210A, 310A) and the second cell (120, 210B, 310B),, and wherein the second gas outlet is fluidly coupled to the third cell (210C, 310C) and the fourth cell (210D, 310D).

6. The modular gas processing system of claim 4, wherein the first cell (110, 210A, 310A), the second cell (120, 210B, 310B), the third cell (210C, 310C), and the fourth cell (210D, 310D) share the common liquid space, and wherein the fluid outlet is coupled to the common liquid space.

7. A method for gas processing, comprising:
feeding a flue gas stream to first cell (110, 210A, 310A) and a second cell (120, 210B, 310B) disposed within a common housing (102) as a function of a volume of gas to be processed, wherein each of the first cell (110, 210A, 310A) and the second cell (120, 210B, 310B) comprises a gas-liquid contacting surface area (114,124), wherein the first cell (110, 210A, 310A) and the second cell (120, 210B, 310B) share a common liquid space (130) comprising a liquid reservoir, and wherein the first cell (110, 210A, 310A) and the second cell (120, 210B, 310B) are separated by a first vertical wall (134) having an opening (132) in a bottom portion of the first wall (134), such that a liquid within each cell can flow to an adjacent cell via the opening (132) and a level of the liquid reservoir is above the opening (132), wherein the first cell (110, 210A, 310A) comprises a first gas inlet (112), and wherein the second cell (120, 210B, 310B) comprises a second gas inlet (122);
injecting a liquid into each of the first cell (110, 210A, 310A) and the second cell (120, 210B, 310B) via a liquid inlet wherein the liquid inlet is coupled to a first distributor disposed within the first cell (110, 210A, 310A) and a second distributor disposed within the second cell (120, 210B, 310B), wherein the first distributor and the second distributor are configured to distribute a liquid within at least a portion of each of the first cell (110, 210A, 310A) and the second cell (120, 210B, 310B); and
removing at least a portion of the liquid from the second cell (120, 210B, 310B) via the opening in the first vertical wall (134) and the common liquid space (130) and a fluid outlet (140) coupled to each of the first cell (110, 210A, 310A) and the second cell(120, 210B, 310B);
removing the processed flue gas through one or more exhaust outlets (160); and
shutting down operation of the gas processing equipment in the second cell (120, 210B, 310B) as a function of the volume of flue gas in the flue gas stream to be processed,
wherein the common liquid space comprises a floor that slopes down towards a fluid outlet (140) coupled to each of the first cell (110, 210A, 310A) and the second cell (120, 210B, 310B).

8. The method of claim 7, wherein the first cell (110, 210A, 310A) and the second cell (120, 210B, 310B) share a common gas outlet.

9. The method of claim 7, wherein each of the first cell (110, 210A, 310A) and the second cell (120, 210B, 310B) comprises a carbon dioxide capture system.

10. The method of claim 7, wherein each of the first cell (110, 210A, 310A) and the second cell (120, 210B, 310B) comprises a direct contact cooler.

## Patentansprüche

1. Modulares Gasverarbeitungssystem, umfassend:
ein äußeres Gehäuse (102), das dazu ausgestaltet ist, eine modulare Anordnung von Zellen innerhalb des äußeren Gehäuses (102) zu ermöglichen:
eine erste Zelle (110, 210A, 310A) und eine zweite Zelle (120, 210B, 310B), die innerhalb des äußeren Gehäuses (102) angeordnet sind, wobei die erste Zelle (110, 210A, 310A) und die zweite Zelle (120, 210B, 310B) jeweils eine Gas-Flüssigkeits-Kontaktfläche (114, 124) umfassen, wobei sich die erste Zelle (110, 210A, 310A) und die zweite Zelle (120, 210B, 310B) einen gemeinsamen Flüssigkeitsraum (130) teilen, der ein Flüssigkeitsreservoir umfasst, wobei die erste Zelle (110, 210A, 310A) und die zweite Zelle (120, 210B, 310B) über den gemeinsamen Flüssigkeitsraum (130) fluidisch miteinander gekoppelt sind, und wobei die zweite Zelle (120, 210B, 310B) in Abhängigkeit eines zu verarbeitenden Rauchgasvolumens abgeschaltet werden kann, wobei die erste Zelle (110, 210A, 310A) einen ersten Gaseinlass (112) umfasst und wobei die zweite Zelle (120, 210B, 310B) einen zweiten Gaseinlass (122) umfasst;
einen Fluidauslass (140), der mit jeder von der ersten Zelle (110, 210A, 310A) und der zweiten Zelle (120, 210B, 310B) gekoppelt ist, wobei der gemeinsame Flüssigkeitsraum (130) einen Boden (136) umfasst, der in Richtung des Fluidauslasses (140) nach unten abfällt, der mit jeder von der ersten und der zweiten Zelle (110, 210A, 310A, 120, 210B, 310B) gekoppelt ist, und wobei die erste und die zweite Zelle (110, 210A, 310A, 120, 210B, 310B) durch eine erste vertikale Wand (134) getrennt sind, die eine Öffnung (132) in einem unteren Abschnitt der ersten Wand (134) aufweist, sodass Flüssigkeit innerhalb jeder Zelle (110, 210A, 310A, 120, 210B, 310B) über die Öffnung (132) zu einer benachbarten Zelle (110, 210A, 310A, 120, 210B, 310B) fließen kann und ein Füllstand des Flüssigkeitsreservoirs sich über der Öffnung (132) befindet;
einen Flüssigkeitseinlass (150), der mit einem ersten Verteiler, der in der ersten Zelle (110, 210A, 310A) angeordnet ist, und einem zweiten Verteiler gekoppelt ist, der in der zweiten Zelle (120, 210B, 310B) angeordnet ist, wobei der erste Verteiler und der zweite Verteiler dazu ausgestaltet sind, eine Flüssigkeit innerhalb mindestens eines Teils von jeder von der ersten Zelle (110, 210A, 310A) und der zweiten Zelle (120, 210B, 310B) zu verteilen; und
einen oder mehrere Abluftauslässe (160), um zu ermöglichen, dass das verarbeitete Rauchgas das Gehäuse (102) verlassen kann;
wobei die erste Zelle (110, 210A, 310A) und die zweite Zelle (120, 210B, 310B) unabhängig voneinander betriebsfähig sind.

2. Modulares Gasverarbeitungssystem nach Anspruch 1, wobei der gemeinsame Flüssigkeitsraum (130) fluidisch mit einer ersten Pumpe (142) gekoppelt ist.

3. Modulares Gasverarbeitungssystem nach Anspruch 1, wobei die erste Zelle (110, 210A, 310A) und die zweite Zelle (120, 210B, 310B) jeweils dazu ausgestaltet sind, ein Zufuhrgas aufzunehmen, und wobei der Fluidauslass (140) einen Gasauslass (160) in einem oberen Abschnitt des äußeres Gehäuse (102) umfasst, der mit jeder von der ersten Zelle (110, 210A, 310A) und der zweiten Zelle (120, 210B, 310B) fluidisch gekoppelt ist.

4. Modulares Gasverarbeitungssystem nach Anspruch 1, ferner umfassend:
eine dritte Zelle (210C, 310C) und eine vierte Zelle (210D, 310D), die innerhalb des äußeren Gehäuses (102) angeordnet sind;
wobei die erste Zelle (110, 210A, 310A), die zweite Zelle (120, 210B, 310B), die dritte Zelle (210C, 310C) und die vierte Zelle (210D, 310D) über den gemeinsamen Flüssigkeitsraum fluidisch miteinander gekoppelt sind; und wobei der Fluidauslass mit jeder von der dritten Zelle (210C, 310C) und der vierten Zelle (210D, 310D) gekoppelt ist.

5. Modulares Gasverarbeitungssystem nach Anspruch 1, wobei der eine oder die mehreren Abgasauslässe (160) einen ersten Gasauslass und einen zweiten Gasauslass umfassen, wobei der erste Gasauslass mit der ersten Zelle (110, 210A, 310A) und der zweiten Zelle (120, 210B, 310B) fluidisch gekoppelt ist und wobei der zweite Gasauslass mit der dritten Zelle (210C, 310C) und der vierten Zelle (210D, 310D) fluidisch gekoppelt ist.

6. Modulares Gasverarbeitungssystem nach Anspruch 4, wobei die erste Zelle (110, 210A, 310A), die zweite Zelle (120, 210B, 310B), die dritte Zelle (210C, 310C) und die vierte Zelle (210D, 310D) sich den gemeinsamen Flüssigkeitsraum teilen und wobei der Fluidauslass mit dem gemeinsamen Flüssigkeitsraum gekoppelt ist.

7. Verfahren zur Gasverarbeitung, umfassend:
Zuführen eines Rauchgasstroms zu einer ersten Zelle (110, 210A, 310A) und einer zweiten Zelle (120, 210B, 310B), die innerhalb eines gemeinsamen Gehäuses (102) angeordnet sind, in Abhängigkeit eines zu verarbeitenden Gasvolumens, wobei die erste Zelle (110, 210A, 310A) und die zweite Zelle (120, 210B, 310B) jeweils eine Gas-Flüssigkeits-Kontaktfläche (114, 124) umfassen, wobei sich die erste Zelle (110, 210A, 310A) und die zweite Zelle (120, 210B, 310B) einen gemeinsamen Flüssigkeitsraum (130) teilen, der ein Flüssigkeitsreservoir umfasst, und wobei die erste Zelle (110, 210A, 310A) und die zweite Zelle (120, 210B, 310B) durch eine erste vertikale Wand (134) getrennt sind, die eine Öffnung (132) in einem unteren Abschnitt der ersten Wand (134) aufweist, sodass eine Flüssigkeit innerhalb jeder Zelle über die Öffnung (132) zu einer benachbarten Zelle fließen kann und ein Füllstand des Flüssigkeitsreservoirs sich über der Öffnung (132) befindet, wobei die erste Zelle (110, 210A, 310A) einen ersten Gaseinlass (112) umfasst und wobei die zweite Zelle (120, 210B, 310B) einen zweiten Gaseinlass (122) umfasst;
Injizieren einer Flüssigkeit in jede von der ersten Zelle (110, 210A, 310A) und der zweiten Zelle (120, 210B, 310B) über einen Flüssigkeitseinlass, wobei der Flüssigkeitseinlass mit einem ersten Verteiler, der in der ersten Zelle (110, 210A, 310A) angeordnet ist, und einem zweiten Verteiler gekoppelt ist, der in der zweiten Zelle (120, 210B, 310B) angeordnet ist, wobei der erste Verteiler und der zweite Verteiler dazu ausgestaltet sind, eine Flüssigkeit innerhalb mindestens eines Teils von jeder von der ersten Zelle (110, 210A, 310A) und der zweiten Zelle (120, 210B, 310B) zu verteilen; und
Entfernen mindestens eines Teils der Flüssigkeit aus der zweiten Zelle (120, 210B, 310B) über die Öffnung in der ersten vertikalen Wand (134) und den gemeinsamen Flüssigkeitsraum (130) und einen Fluidauslass (140), der mit jeder von der ersten Zelle (110, 210A, 310A) und der zweiten Zelle (120, 210B, 310B) gekoppelt ist;
Entfernen des verarbeiteten Rauchgases durch einen oder mehrere Abgasauslässe (160); und
Herunterfahren des Betriebs der Gasverarbeitungsanlage in der zweiten Zelle (120, 210B, 310B) in Abhängigkeit von dem Rauchgasvolumen in dem zu verarbeitenden Rauchgasstrom;
wobei der gemeinsame Flüssigkeitsraum einen Boden umfasst, der in Richtung eines Fluidauslasses (140) nach unten abfällt, der mit jeder von der ersten Zelle (110, 210A, 310A) und der zweiten Zelle (120, 210B, 310B) gekoppelt ist.

8. Verfahren nach Anspruch 7, wobei die erste Zelle (110, 210A, 310A) und die zweite Zelle (120, 210B, 310B) einen gemeinsamen Gasauslass teilen.

9. Verfahren nach Anspruch 7, wobei die erste Zelle (110, 210A, 310A) und die zweite Zelle (120, 210B, 310B) jeweils ein Kohlendioxid-Erfassungssystem umfassen.

10. Verfahren nach Anspruch 7, wobei die erste Zelle (110, 210A, 310A) und die zweite Zelle (120, 210B, 310B) jeweils einen Direktkontaktkühler umfassen.

## Revendications

1. Système de traitement modulaire de gaz, comprenant :
un boîtier extérieur (102) configuré pour permettre un placement modulaire de cellules à l'intérieur du boîtier extérieur (102) :
une première cellule (110, 210A, 310A) et une deuxième cellule (120, 210B, 310B) disposées à l'intérieur du boîtier extérieur (102), dans lequel chacune de la première cellule (110, 210A, 310A) et de la deuxième cellule (120, 210B, 310B) comprend une zone de surface de contact gaz-liquide (114, 124), dans lequel la première cellule (110, 210A, 310A) et la deuxième cellule (120, 210B, 310B) partagent un espace liquide commun (130) comprenant un réservoir de liquide, dans lequel la première cellule (110, 210A, 310A) et la deuxième cellule (120, 210B, 310B) sont couplées fluidiquement l'une à l'autre par l'intermédiaire de l'espace liquide commun (130), et dans lequel la deuxième cellule (120, 210B, 310B) peut être arrêtée en fonction d'un volume de gaz de combustion à traiter, dans lequel la première cellule (110, 210A, 310A) comprend une première entrée de gaz (112), et dans lequel la deuxième cellule (120, 210B, 310B) comprend une seconde entrée de gaz (122) ;
une sortie de fluide (140) couplée à chacune de la première cellule (110, 210A, 310A) et de la deuxième cellule (120, 210B, 310B), dans lequel l'espace liquide commun (130) comprend un plancher (136) qui descend vers la sortie de fluide (140) couplée à chacune des première et deuxième cellules (110, 210A, 310A, 120, 210B, 310B), et dans lequel les première et deuxième cellules (110, 210A, 310A, 120, 210B, 310B) sont séparées par une première paroi verticale (134) ayant une ouverture (132) dans une partie inférieure de la première paroi (134), de sorte que le liquide à l'intérieur de chaque cellule (110, 210A, 310A, 120, 210B, 310B) peut s'écouler vers une cellule adjacente (110, 210A, 310A, 120, 210B, 310B) par l'intermédiaire de l'ouverture (132) et qu'un niveau du réservoir de liquide est situé au-dessus de l'ouverture (132) ;
une entrée de liquide (150) couplée à un premier distributeur disposé à l'intérieur de la première cellule (110, 210A, 310A) et à un second distributeur disposé à l'intérieur de la deuxième cellule (120, 210B, 310B), dans lequel le premier distributeur et le second distributeur sont configurés pour distribuer un liquide à l'intérieur d'au moins une partie de chacune de la première cellule (110, 210A, 310A) et de la deuxième cellule (120, 210B, 310B) ; et
une ou plusieurs sorties d'échappement (160) pour permettre au gaz de combustion traité de quitter le boîtier (102) ;
dans lequel la première cellule (110, 210A, 310A) et la deuxième cellule (120, 210B, 310B) peuvent fonctionner indépendamment.

2. Système de traitement modulaire de gaz selon la revendication 1, dans lequel l'espace liquide commun (130) est couplé fluidiquement à une première pompe (142).

3. Système de traitement modulaire de gaz selon la revendication 1, dans lequel chacune de la première cellule (110, 210A, 310A) et de la deuxième cellule (120, 210B, 310B) est configurée pour recevoir un gaz d'alimentation, et dans lequel la sortie de fluide (140) comprend une sortie de gaz (160) dans une partie supérieure du boîtier extérieur (102) qui est couplée fluidiquement à chacune de la première cellule (110, 210A, 310A) et de la deuxième cellule (120, 210B, 310B).

4. Système de traitement modulaire de gaz selon la revendication 1, comprenant en outre :
une troisième cellule (210C, 310C) et une quatrième cellule (210D, 310D) disposées à l'intérieur du boîtier extérieur (102) ;
dans lequel la première cellule (110, 210A, 310A), la deuxième cellule (120, 210B, 310B), la troisième cellule (210C, 310C) et la quatrième cellule (210D, 310D) sont couplées fluidiquement l'une à l'autre par l'intermédiaire de l'espace liquide commun ; et dans lequel la sortie de fluide est couplée à chacune de la troisième cellule (210C, 310C) et de la quatrième cellule (210D, 310D).

5. Système de traitement modulaire de gaz selon la revendication 1, dans lequel les une ou plusieurs sorties d'échappement (160) comprennent une première sortie de gaz et une seconde sortie de gaz, dans lequel la première sortie de gaz est couplée fluidiquement à la première cellule (110, 210A, 310A) et à la deuxième cellule (120, 210B, 310B), et dans lequel la seconde sortie de gaz est couplée fluidiquement à la troisième cellule (210C, 310C) et à la quatrième cellule (210D, 310D).

6. Système de traitement modulaire de gaz selon la revendication 4, dans lequel la première cellule (110, 210A, 310A), la deuxième cellule (120, 210B, 310B), la troisième cellule (210C, 310C) et la quatrième cellule (210D, 310D) partagent l'espace liquide commun, et dans lequel la sortie de fluide est couplée à l'espace liquide commun.

7. Procédé de traitement de gaz, comprenant :
l'alimentation d'un flux de gaz de combustion vers une première cellule (110, 210A, 310A) et une deuxième cellule (120, 210B, 310B) disposées à l'intérieur d'un boîtier commun (102) en fonction d'un volume de gaz à traiter, dans lequel chacune de la première cellule (110, 210A, 310A) et de la deuxième cellule (120, 210B, 310B) comprend une zone de surface de contact gaz-liquide (114, 124), dans lequel la première cellule (110, 210A, 310A) et la deuxième cellule (120, 210B, 310B) partagent un espace liquide commun (130) comprenant un réservoir de liquide, et dans lequel la première cellule (110, 210A, 310A) et la deuxième cellule (120, 210B, 310B) sont séparées par une première paroi verticale (134) ayant une ouverture (132) dans une partie inférieure de la première paroi (134), de sorte qu'un liquide à l'intérieur de chaque cellule peut s'écouler vers une cellule adjacente par l'intermédiaire de l'ouverture (132) et qu'un niveau du réservoir de liquide est situé au-dessus de l'ouverture (132), dans lequel la première cellule (110, 210A, 310A) comprend une première entrée de gaz (112), et dans lequel la deuxième cellule (120, 210B, 310B) comprend une seconde entrée de gaz (122) ;
l'injection d'un liquide dans chacune de la première cellule (110, 210A, 310A) et de la deuxième cellule (120, 210B, 310B) par l'intermédiaire d'une entrée de liquide, dans lequel l'entrée de liquide est couplée à un premier distributeur disposé à l'intérieur de la première cellule (110, 210A, 310A) et à un second distributeur disposé à l'intérieur de la deuxième cellule (120, 210B, 310B), dans lequel le premier distributeur et le second distributeur sont configurés pour distribuer un liquide à l'intérieur d'au moins une partie de chacune de la première cellule (110, 210A, 310A) et de la deuxième cellule (120, 210B, 310B) ; et
l'élimination d'au moins une partie du liquide de la deuxième cellule (120, 210B, 310B) par l'intermédiaire de l'ouverture dans la première paroi verticale (134) et de l'espace liquide commun (130) et d'une sortie de fluide (140) couplée à chacune de première cellule (110, 210A, 310A) et de la deuxième cellule (120, 210B, 310B) ;
l'élimination du gaz de combustion traité à travers une ou plusieurs sorties d'échappement (160) ; et
l'arrêt du fonctionnement de l'équipement de traitement de gaz dans la deuxième cellule (120, 210B, 310B) en fonction du volume de gaz de combustion dans le flux de gaz de combustion à traiter,
dans lequel l'espace liquide commun comprend un plancher qui descend vers une sortie de fluide (140) couplée à chacune de la première cellule (110, 210A, 310A) et de la deuxième cellule (120, 210B, 310B).

8. Procédé selon la revendication 7, dans lequel la première cellule (110, 210A, 310A) et la deuxième cellule (120, 210B, 310B) partagent une sortie de gaz commune.

9. Procédé selon la revendication 7, dans lequel chacune de la première cellule (110, 210A, 310A) et de la deuxième cellule (120, 210B, 310B) comprend un système de capture de dioxyde de carbone.

10. Procédé selon la revendication 7, dans lequel chacune de la première cellule (110, 210A, 310A) et de la deuxième cellule (120, 210B, 310B) comprend un refroidisseur à contact direct.
